# EUROPEAN PATENT APPLICATION

(11) **EP 2 565 410 A1**
(43) Date of publication of application: **06.03.2013**
(21) Application number: 10850631.2
(22) Date of filing: 26.04.2010
(51) Int. Cl.: F01N 3/20, F01N 3/02

(54) **INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: UNO, Koki, Toyota-shi, Aichi 471-8571 (JP); HASHIMOTO, Eiji, Toyota-shi, Aichi 471-8571 (JP); MORI, Taiichi, Toyota-shi, Aichi 471-8571 (JP); FUJIWARA, Masahiro, Toyota-shi, Aichi 471-8571 (JP); HANADA, Shunichi, Toyota-shi, Aichi 471-8571 (JP); KANBA, Chika, Toyota-shi, Aichi 471-8571 (JP)
(74) Representative: Intès, Didier Gérard André
(86) International application number: PCT/JP2010/002984
(87) International publication number: WO 2011/135607

(57) **Abstract**

An internal combustion engine according to the present invention includes an exhaust treatment apparatus provided in an exhaust passage, and a burner apparatus provided upstream of the exhaust treatment apparatus to raise exhaust temperature. A valve driving state of at least one of an intake valve and an exhaust valve is controlled so as to reduce a flow rate of exhaust gas passing through the burner apparatus when the flow rate of the exhaust gas is equal to or larger than a predetermined value. Possible flame blow-out in the burner apparatus can be prevented or suppressed to ensure sufficient ignition performance.

## Description

### Technical Field

The present invention relates to an internal combustion engine, and in particular, to an internal combustion engine with a burner apparatus provided in an exhaust passage and upstream of an exhaust treatment apparatus to raise exhaust temperature.

### Background Art

In some internal combustion engines, a burner apparatus is provided in an exhaust passage and upstream of an exhaust treatment apparatus (catalyst). Heated gas generated by the burner apparatus is utilized to raise exhaust temperature to heat the exhaust treatment apparatus, thus facilitating warm-up of the exhaust treatment apparatus.

PTL1 discloses a catalyst temperature rise apparatus including an addition valve that allows fuel to be injected and ignition means with a heating section that allows the injected fuel to be ignited. The addition valve and the ignition means are disposed at positions that allow the fuel injected through the addition valve to come into direct contact with the heating section. Thus, typically, the burner apparatus uses the appropriate ignition means to ignite and combust the fuel injected into the exhaust passage.

The ignition performance of the burner apparatus tends to be degraded when the flow rate of exhaust gas passing through the burner apparatus increases to or beyond a predetermined value. This is because at the increased flow rate, the exhaust gas may blow out the flame, making the ignition difficult.

Thus, an object of the present invention is to provide an internal combustion engine that allows sufficient ignition performance to be ensured even when the flow rate of exhaust gas passing through the burner apparatus increases.

### Citation List

### Patent Literature

PTL1: Japanese Patent Laid-Open No. 2006-112401

### Summary of the Invention

An aspect of the present invention provides an internal combustion engine characterized by:
an exhaust treatment apparatus provided in an exhaust passage;
a burner apparatus provided upstream of the exhaust treatment apparatus to raise exhaust temperature, and
valve driving control means for controlling a valve driving state of at least one of an intake valve and an exhaust valve so as to reduce a flow rate of exhaust gas passing through the burner apparatus when the flow rate of the exhaust gas is equal to or larger than a predetermined value.

When the valve driving state is thus controlled so as to reduce the flow rate of the exhaust gas, possible flame blow-out can be prevented or suppressed to ensure sufficient ignition performance.

Preferable, the valve driving control means includes:
a valve, timing varying mechanism adapted to vary a valve timing for the exhaust valve, and
first control means for controlling the valve timing varying mechanism in such a manner that the exhaust valve is kept open until during a descent of a piston following an exhaust stroke, when the flow rate of the exhaust gas is equal to or larger than the predetermined value.

When the exhaust valve is kept open until during the descent of the piston after the end of the exhaust stroke, a negative pressure generated during the descent of the piston can be utilized to suck exhaust gas back into a combustion chamber. This enables a reduction in the flow rate of exhaust gas fed to the burner apparatus. Hence, sufficient ignition performance can be suitably ensured.

Preferably, the valve driving control means includes a halting mechanism adapted to halt operation of at least one of the intake valve and the exhaust valve in a part of a plurality of cylinders and second control means for controlling the halting mechanism so as to halt the operation of at least one of the intake valve and the exhaust valve in the part of cylinders, when the flow rate of the exhaust gas is equal to or larger than the predetermined value.

When the operation of the at least one of the intake valve and the exhaust valve is halted in the certain number of cylinders, exhaust gas is prevented from being passed from these cylinders toward the burner apparatus, enabling a reduction in the total flow rate of exhaust gas from all the cylinders. Hence, sufficient ignition performance can be suitably ensured.

Preferably, the internal combustion engine further includes detection means for detecting an amount of intake air as a substitute value for the flow rate of the exhaust gas, and
the valve driving control means controls the valve driving state of at least one of the intake valve and the exhaust valve, so as to reduce the flow rate of the exhaust gas when the amount of intake air detected but the detection means is equal to or larger than a predetermined value.

Preferably, the burner apparatus includes a fuel addition valve, ignition means, and a pretreatment catalytic converter.

### Brief Description of Drawings

[Fig. 1] Fig. 1 is a schematic diagram of an embodiment of the present invention;
[Fig. 2] Fig. 2 is a side profile showing a burner apparatus;
[Fig. 3] Fig. 3 is a front profile of the burner apparatus as seen from an upstream side;
[Fig. 4] Fig. 4 is a schematic diagram showing that an exhaust valve is closed in a delayed manner; and
[Fig. 5] Fig. 5 is a schematic diagram showing that operations of an intake valve and the exhaust valve are halted.

### Description of Embodiments

Preferred embodiments of the present invention will be described below in detail. However, it should be noted that the embodiments of the present invention are not limited to those which are described below and that the present invention includes any variations and applications embraced in the concepts of the present invention defined by the claims. The dimensions, materials, shapes, relative arrangements, and the like of components described in the embodiments are not intended to limit the technical scope of the present invention thereto unless otherwise specified.

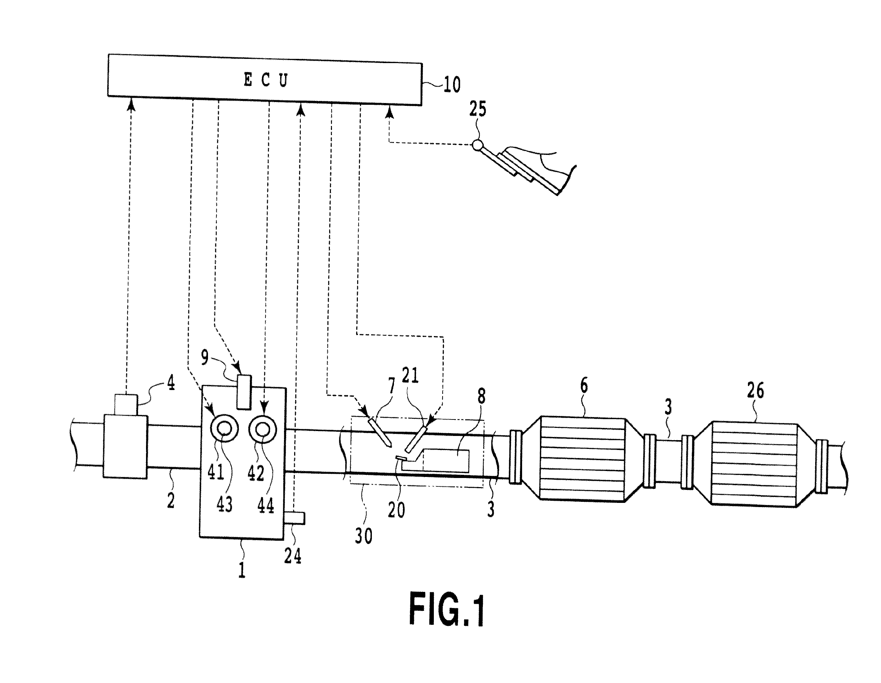

Fig. 1 shows an engine main body 1 and an intake and exhaust system thereof according to an embodiment. The engine main body 1 is an onboard four-stroke diesel engine. An intake pipe 2 and an exhaust pipe 3 (exhaust passage) are connected to the engine main body 1. An air flow meter 4 is provided in the middle of the intake pipe 2 and outputs a signal corresponding to the flow rate of intake air flowing through the intake pipe 2. The air flow meter 4 detects the amount of intake air flowing into the engine main body 1 per unit time (that is, the flow rate of intake air). The engine main body 1 includes a plurality of cylinders each including an infra-cylinder fuel injection valve 9. However, Fig. 1 shows only a single intra-cylinder fuel injection valve 9.

The exhaust pipe 3 is connected to a muffler (not shown in the drawings) at a terminal thereof and is open to the atmosphere at an outlet of the muffler. In the middle of the exhaust pipe 3, an oxidizing catalytic converter 6 and an NOx catalytic converter 26 are arranged in this order from the upstream side in series.

The oxidizing catalytic converter 6 allows an unchanged component such as HC or CO to react with O₂ to obtain CO, CO₂, H₂O, or the like. A catalytic substance may be, for example, Pt/CeO₂, Mn/CeO₂, Fe/CeCO₂, Ni/CeO₂, or Cu_{/}CeO₂.

An NOx catalytic converter 26 preferably includes an NOx storage reduction (NSR) catalytic converter. The NOx catalytic converter 26 has a function to absorb NOx in inflow exhaust when the exhaust has a high oxygen concentration and to reduce the absorbed NOx when the oxygen concentration of the exhaust decreases and when a reduction component (for example, fuel) is present. The NOx catalytic converter 26 includes a base material formed of an oxide such as alumina Al₂O₃ and including rare metal such as platinum Pt and a NOx absorbing component carried on a surface of the base material; the rare metal serves as a catalytic component. The NOx absorbing component contains at least one selected from, for example, alkali metals such as potassium K, sodium Na, lithium Li, and cesium Cs, alkali earths such as barium Ba and calcium Ca, and rare earths such as lanthanum La and yttrium Y. In addition, the NOx catalytic converter 26 may be a selective catalytic reduction (SCR) NOx converter.

In addition to the oxidizing catalytic converter 6 and the NOx converter 26, a particulate filter (DPF) may be provided which collects particulates (PM) in the exhaust such as snoot. Preferably, the DPF is of continuous regeneration type that continuously oxidizes and combusts collected particulates. Preferable, the DPF is located at least downstream of the oxidizing catalytic converter 6 and upstream or downstream of the NOx catalytic converter 26. For a spark ignition internal combustion engine, a three-way catalyst is preferably provided in the exhaust passage. The oxidizing catalytic converter 6, the NOx catalytic converter 26, the DPF, and the three-way catalyst correspond to an exhaust treatment apparatus according to the present invention.

In the exhaust pipe 3, a burner apparatus 30 is located upstream of the oxidizing catalytic converter 6. The burner apparatus 30 includes a fuel addition valve 7, a glow plug 21 serving as ignition means, and a pretreatment catalytic converter 8. The burner apparatus 30 is located downstream of a collector portion of an exhaust manifold (not shown in the drawings) connected to the engine main body 1.

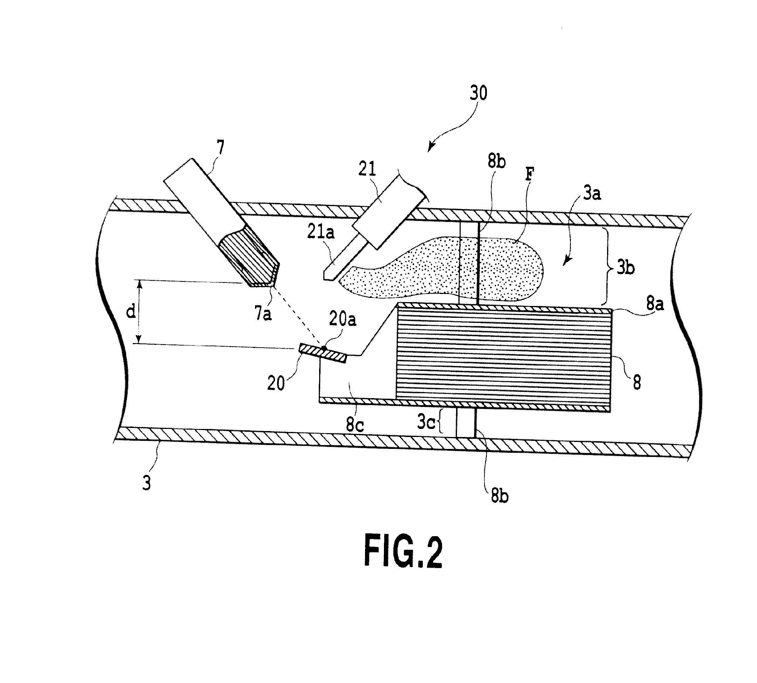

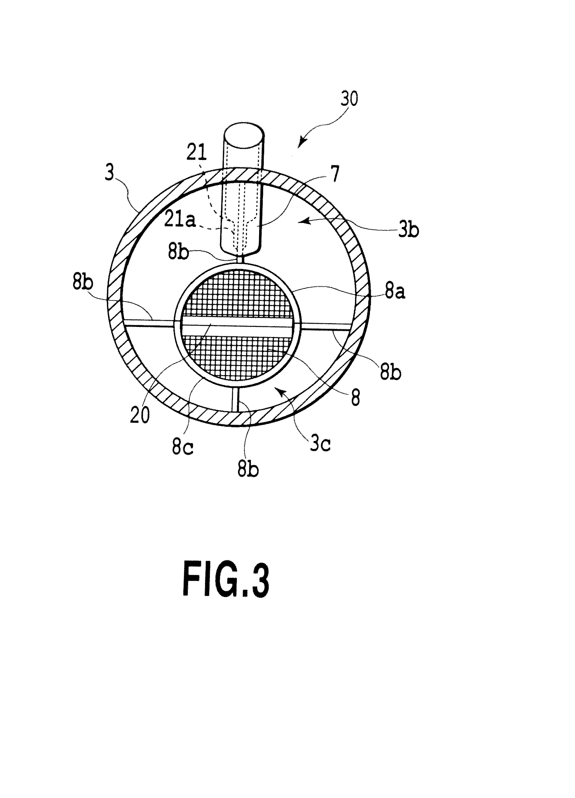

As shown in Fig. 2 and Fig. 3 in detail, the fuel addition valve 7 allows a liquid fuel (light oil) to be added into the exhaust. The fuel addition valve 7 includes a single nozzle 7a. The central axis of the nozzle 7a contains a component traversing the exhaust pipe 3 and is inclined obliquely downward toward the downstream side of the exhaust pipe 3. Alternatively, a plurality of nozzles may be provided.

A pretreatment catalytic converter 8 that reforms fuel injected through the fuel addition valve 7 is provided between the fuel addition valve 7 and the oxidizing catalytic converter 6 in the exhaust pipe 3. The pretreatment catalytic converter 8 can be configured as an oxidizing catalytic converter including, for example, a carrier made of zeolite and carrying rhodium or the like.

When fuel is fed to the pretreatment catalytic converter 8, if the pretreatment catalytic converter 8 has been activated, then the fuel is oxidized in the pretreatment catalytic converter 8. The resulting oxidizing reaction heat raises the temperature of the pretreatment catalytic converter 8. This enables an increase in the temperature of exhaust gas passing through the pretreatment catalytic converter 8.

Furthermore, when the temperature of the pretreatment catalytic converter 8 increases, hydrocarbons in the fuel which have a large carbon number are decomposed into reactive hydrocarbon with a smaller carbon number. This allows the fuel to be reformed into reactive fuel.

In other words, the pretreatment catalytic converter 8, on one hand, forms a rapid heater that generates heat rapidly, and on the other hand, forms a reformed fuel discharger that discharges the reformed fuel. Furthermore, a portion or all of the fuel fed through the fuel addition valve 7 is ignited by the glow plug 21. This also facilitates a rise in the temperature of exhaust gas.

The pretreatment catalytic converter 8 has an outer diameter smaller than the inner diameter of the exhaust pipe 3. Thus, when the pretreatment catalytic converter 8 is placed in the exhaust pipe 3 , exhaust can pass through a catalyst bypass circuit 3a that is a gap between an outer peripheral surface of the pretreatment catalytic converter 8 and an inner peripheral surface of the exhaust pipe 3. The pretreatment catalytic converter 8 is a straight flow type in which individual cells communicate with one another from upstream side to the downstream side. The pretreatment catalytic converter 8 is arranged in a generally cylindrical outer frame 8a that is supported in the exhaust pipe 3 by a plurality of generally radially arranged stays 8b. The pretreatment catalytic converter 8 is enclosed by the catalyst bypass circuit 3a substantially all around the circumference thereof except for portions thereof to which the stays 8b are attached.

The exhaust pipe 3 is generally cylindrically formed. The axis of the direction of an exhaust flow in the pretreatment catalytic converter 8 is located tower, in Fig. 2 and Fig. 3, than the axis of the direction of an exhaust flow in the exhaust pipe 3. Thus, the catalyst bypass circuit 3a includes a wide-side bypass circuit 3b shown in the upper part of Fig. 2 and Fig. 3 and a narrow-side bypass circuit 3c shown in the lower part of Fig. 2 and Fig. 3.

The glow plug 21 is installed such that a heating section 21a thereof is positioned downstream of the fuel addition valve 7 and upstream of the pretreatment catalytic converter 8. The glow plug 21 is connected to an onboard DC power source via a booster circuit (not shown in the drawings). The heating section 21a generates heat when current is applied to the glow plug 21. The heat generated by the heating section 21a enables the fuel fed through the fuel addition valve 7 to be ignited to generate a flame F. The glow plug 21 has an axis inclined toward the upstream side of the exhaust pipe 3. However, the glow plug 21 may be arranged in any orientation, for example, orthogonally to the direction of a flow or parallel to a longitudinal direction of an impact plate 20 described below. The ignition means may be another apparatus such as a ceramic heater or a spark plug, particularly an electrothermal apparatus or a spark ignition apparatus.

A lower part of a front end of the outer frame 8a with the pretreatment catalytic converter 8 accommodated therein forms a gutter-like projecting portion 8c that projects toward the upstream side. The impact plate 20, which is formed of a flat plate, is fixed to a leading end (upstream end) and upper end of the projecting portion 8c. The impact plate 20 is slightly inclined so as to lie below the axis of the exhaust pipe 3 and so that a downstream end of the impact plate 20 is positioned below the upstream end thereof.

The impact plate 20 can be formed of a material such s SUS which has high heat resistance and high impact resistance. The fuel addition valve 7 allows fuel to be injected obliquely backward and downward toward the impact plate 20. The central axis of the nozzle 7a of the fuel addition valve 7 lies toward the center 20a of top surface of the impact plate 20. The trajectory of the fuel fed through the fuel addition valve 7 contains a component acting in a direction traversing the exhaust pipe 3. Upon impacting the impact plate 20, the fuel is more smoothly atomized and more appropriately dispersed and diffuses. The fuel having impacted the impact plate 20 is directed toward the downstream side by an exhaust flow. The fuel having impacted the impact plate 20 is fed to the pretreatment catalytic converter 8 and the heating section 21a of the glow plug 21.

The heating section 21a of the glow plug 21 is located in the vicinity of the pretreatment catalytic converter 8 and slightly upstream of and above a front end surface of the pretreatment catalytic converter 8 so as to be capable of exchanging heat with pretreatment catalytic converter 8. That is, the glow plug 21 is positioned such that when the temperature of the pretreatment catalytic converter 8 rises, the resulting heat radiation and convection serves to raise the temperature in the vicinity of the heating section 21a of the glow plug 21, thus facilitating the ignition of the fuel fed through the fuel addition valve 7. However, the position of the heating section 21a of the glow plug 21 in the flow direction may be the same as the position of the front end surface of the pretreatment catalytic converter 8 or a position located downstream of the front end surface.

As shown in Fig. 1, the engine main body 1 includes an electronic control unit (hereinafter referred to as an ECU) 10 that controls various devices according to the operating status of the engine main body 1, a driver's request, or the like. The ECU 10 includes a CPU that carries out various arithmetic processes for engine control, a ROM that stores programs and data required for the control, a RAM that temporarily stores the results of calculations carried out by the CPU, and an input/output port through which the ECT 10 outputs and receives signals to and from an external apparatus.

The ECU 10 connects, via electric wires, not only to the above-described air flow meter 4 but also to various sensors including a crank angle sensor 24 that detects the crank angle of the engine main body 1 and an accelerator opening sensor 25 that outputs electric signals depending on the opening of the accelerator. Output signals from the sensors are input to the ECU 10. Furthermore, the ECU 10 further connects, via electric wires, to various devices including the infra-cylinder injection valve 9, the fuel addition valve 7, and the glow plug 21. The devices are controlled bey the ECU 10. The ECU 10 can detect the amount of intake air based on the output value from the air flow meter 4 , detect the number of engine rotations based on the output value from the crank angle sensor 24, and detect a demand load on the engine main body 1 based on the output value from the output value from the accelerator opening sensor 25.

The engine main body 1 further includes an intake side valve timing varying mechanism 41 and an exhaust side valve timing varying mechanism 42 which vary valve timings for the intake valve and exhaust valve, respectively, of each cylinder. The varying mechanisms 41 and 42 vary the relative phrases of an intake cam shaft 43 and an exhaust cam shaft 44, respectively, with respect to a crank shaft to vary the opening and closing timings for the intake valve and the exhaust valve with the same working angle maintained. These varying mechanisms 41 and 42 are included in the various devices and controlled by the ECU 10.

According to the present embodiment, when temperature rise control is performed using the burner apparatus 30, the ECU 10 controls the fuel addition valve 7 and the glow plug 21. That is, fuel is injected through the fuel injection valve 7, and current is applied to the glow plug 21 as necessary to heat the glow plug 21 to a sufficiently high temperature. The injected fuel is ignited and combusted by the glow plug 21 to generate a flame F and thus hot heated gas. The heated gas is fed to the oxidizing catalytic converter 6 and the NOx catalytic converter 26. Furthermore, the flame F or heated gas can be utilized to combust reformed fuel discharged through an outlet of the pretreatment catalytic converter 8.

The amount of fuel injected through the fuel addition valve 7 is set based on parameters indicative of the operating status of the engine (the parameters include the number of engine rotations, the accelerator opening, and the amount of intake air) in accordance with a map pre-stored in the ROM of the ECU 10.

As described above, the ignition performance of the burner apparatus 30 tends to be degraded when the flow rate of exhaust gas passing through the burner apparatus 30 increases to or beyond a predetermined value. This is because at The increased flow rate, the exhaust gas may blow out the flame, making the ignition difficult.

Such a flame blow-out phenomenon may occur, for example, when the flow rate of the exhaust gas increases to or beyond 12 g/s.

Thus, to deal with this, the present embodiment controls the valve driving state of at least one of the intake valve and the exhaust valve so as to reduce the flow rate of exhaust gas passing through the burner apparatus 30 when the flow rate of the exhaust gas is equal to or larger than a predetermined value. When the valve driving state is thus controlled so as to reduce the flow rate of the exhaust gas passing through the burner apparatus 30, possible flame blow-out can be prevented or suppressed to ensure sufficient ignition performance.

More specifically, the exhaust-side valve timing varying mechanism 42 is controlled such that the exhaust valve is kept open until during a descent of the piston following an exhaust stroke, when the flow rate of the exhaust gas passing through the burner apparatus 30 is equal to or larger than the predetermined value.

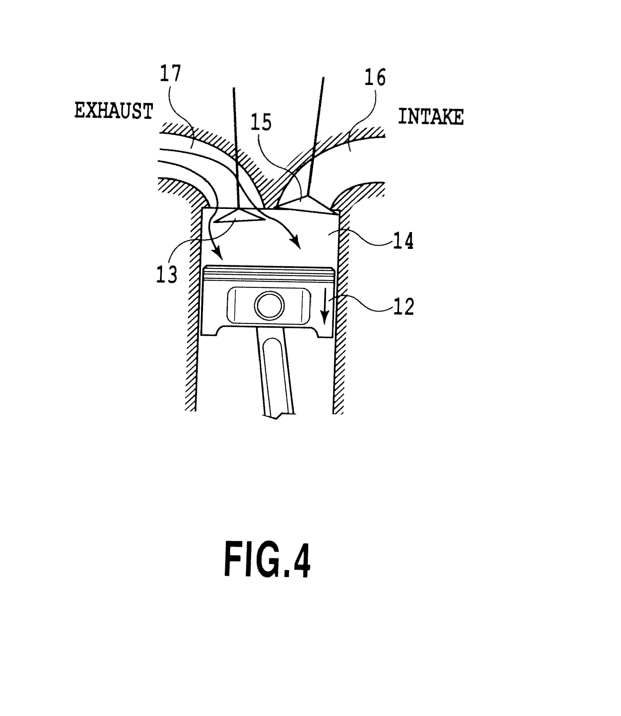

As shown in Fig. 4, when the exhaust valve 13 is kept open until during the descent of the piston 12 after the end of the exhaust stroke (that is, the exhaust valve 13 is closed if a delayed manner), a negative pressure generated during the descent of the piston can be utilized to suck the exhaust gas back into the combustion chamber 14 (that is, to carry out internal EGR). This enables a reduction in the flow rate of exhaust gas fed to the exhaust pipe 3 and thus the burner apparatus 30. Hence, even when the flow rate of the exhaust gas increases to or beyond the predetermined value, the increased flow rate of the exhaust gas can be reduced to prevent or suppress possible flame blow-out. As a result, appropriate and sufficient ignition performance can be ensured. In Fig. 4, the intake valve its shown bey reference numeral 15. An intake port that is in communication with the intake pipe 2 is shown by reference numeral 16. An exhaust port that is in communication with the exhaust pipe 3 is shown by reference numeral 17.

The flow rate of the exhaust gas can be detected directly by the sensor, but the amount of intake air Ga is preferably used as a substitute value for the flow rate of the exhaust gas and detected by the air flow meter 4 and the ECU 10. The ECU 10 controls the exhaust-side valve timing varying mechanism 42 so as to close the exhaust valve 13 (specifically, to end closing the exhaust valve 13) at a predetermined first timing during the descent of the piston following the exhaust stroke, when the amount of intake air Ga detected using the air flow meter 4 is equal to or larger than a predetermined value (for example, 12 g/s). This keeps the exhaust valve 13 open from before an exhaust top dead center to the first timing after the exhaust top dead center. On the other hand, when the amount of intake air Ga detected using the air flow meter 4 is smaller than the predetermined value, the ECU 10 controls the exhaust-side valve timing varying mechanism 42 so as to close the exhaust valve 13 at a predetermined second timing that is earlier than the first timing.

Now, another embodiment will be described. This embodiment is substantially the same as the above-described embodiment, and mainly differences from the above-described embodiment will be described.

This embodiment includes a halting mechanism adapted to halt operation of at least one of the intake valve, 15 and the exhaust valve 13 in one or more (certain number) of the plurality of cylinders as shown in Fag. 5. According to the present embodiment, the halting mechanism includes an intake-side halting mechanism 18 provided for the intake valve 15 in each of halt-enabled cylinders corresponding to the one or more of cylinders and an exhaust-side halting mechanism 19 provided for the exhaust valve 13 in each halt-enabled cylinder. The intake-side halting mechanism 18 and the exhaust-side halting mechanism 19 are provided in each of the halt-enabled cylinders and individually controlled by the ECU 10.

Various well-known mechanisms may be adopted as the halting mechanisms 18 and 19. For example, the following may be adopted: a mechanism that selectively frees a cam on a camshaft by hydraulic control or the like or a mechanism that selectively precludes, by hydraulic control or the like, a driving force from being transmitted from the camshaft to the valve. Alternatively, an electromagnetic driving valve may be used which can be electrically inactivated. The present embodiment includes the valve timing varying mechanisms 41 and 42 in addition to the halting mechanisms 18 and 19. However, the valve timing varying mechanisms 41 and 42 may be omitted. Any number of halt-enabled cylinders may be placed at any position. In each halt-enabled cylinder, one of the intake-side halting mechanism 18 and the exhaust-side halting mechanism 19 may be exclusively provided.

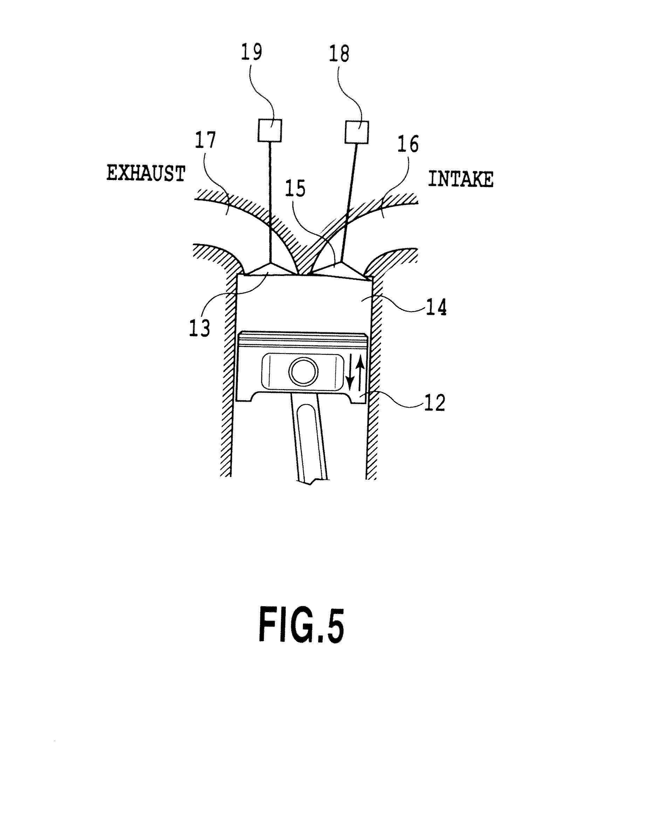

The present embodiment controls the intake-side halting mechanism 18 and the exhaust-side halting mechanism 19 so as to halt operations of both the intake valve 15 and the exhaust valve 13 in each halt-enabled cylinder as shown in Fig. 5 when the flow rate of exhaust gas passing through the burner apparatus 30 is equal to or larger than a predetermined value. In the halt state, the intake value 15 and the exhaust valve 13 are kept closed. Of course, during a halt, no fuel is injected through the intra-cylinder fuel injection valve 9 (omitted from Fig. 5). During a halt, either the intake valve 15 or the exhaust valve 13 may be exclusively halted. In short, the communication between the intake port 16 or the intake pipe 2 and the exhaust port 17 or the exhaust pipe 3 may be disrupted.

when the operation of the at least one of the intake valve 15 and the exhaust valve 13 in each halt-enabled cylinder is halted as described above, no exhaust gas is fed from the halt-enabled cylinder toward the exhaust pipe or the burner apparatus 30. This enables a reduction in the total flow rare of exhaust gas from all the cylinders. Even when the flow rate of the exhaust gas increases to or beyond the predetermined value, the increased flow rate can be reduced. Hence, possible flame blow-out can be prevented or suppressed to ensure appropriate and sufficient ignition performance.

As described above, the flow rate of the exhaust gas can be detected directly by the sensor, but the amount of intake air Ga is preferably used as a substitute value for the flow rate of the exhaust gas and detected by the air flow meter 4 and the ECU 10. The ECU 10 controls the intake-side halting mechanism 18 and the exhaust-side halting mechanism 19 so as to halt the operations of both the intake valve 15 and the exhaust valve 13 in each halt-enabled cylinder when the amount of intake air Ga detected using the air flow meter 4 is equal to or larger than a predetermined value (for example, 12 g/s). This sets the halt-enabled cylinders to a halt state, while setting the other cylinders (normal cylinders) to an operative state. On the other hand, the ECU 10 controls the intake-side halting mechanism 18 and the exhaust-side halting mechanism 19 so as to operate both the intake valve 15 and the exhaust valve 13 in each halt-enabled cylinder, when the amount of intake air Ga detected using the air flow meter 4 is smaller than a predetermined value. This makes both the halt-enabled cylinders and the normal cylinders operative.

The present invention has been somewhat specifically described. However, it should be noted carious alterations and changes may be made to the claimed invention without departing from the spirit and scope of the invention. The embodiments of the present invention are not limited to those which are described above. The present invention includes any variations and applications embraced in the concepts of the present invention defined by the claims. Thus, the present invention should not be interpreted in a limited manner but is applicable to any other techniques included within the scope of the concepts of the present invention. Means for solving the problems according to the present invention may be combined together wherever possible.

At least one of the pretreatment catalytic converter and the exhaust pipe may have a noncircular cross section such as a rectangular cross section or an oblong cross section. The types and arrangement sequence of the components of the exhaust treatment apparatus which are present downstream of the pretreatment catalytic converter are optional.

## Claims

1. An internal combustion engine characterized bey comprising:
an exhaust treatment apparatus provided in an exhaust passage;
a burner apparatus provided upstream of the exhaust treatment apparatus to raise exhaust temperature, and
valve driving control means for controlling a valve driving state of at least one of an intake valve and an exhaust valve so as to reduce a flow rate of exhaust gas passing through the burner apparatus when the flow rate of the exhaust gas is equal to or larger than a predetermined value.

2. The internal combustion engine according to Claim 1, **characterized in that** the valve driving control means comprises:
a valve timing varying mechanism adapted to vary a valve timing for the exhaust valve, and
first control means for controlling the valve timing varying mechanism in such a manner that the exhaust valve is kept open until during a descent of a piston after end of an exhaust stroke, when the flow rate of the exhaust gas is equal to or larger than the predetermined value.

3. The internal combustion engine According to Claim 1, **characterized in that** the valve driving control means comprises:
a halting mechanism adapted to halt operation of at least one of the intake valve and the exhaust valve in one or more of a plurality of cylinders; and
second control means for controlling the halting mechanism so as to halt the operation of at least one of the intake valve and the exhaust valve in the one or more of the plurality of cylinders, when the flow rate of the exhaust gas is equal to or larger than the predetermined value.

4. The internal combustion engine according to any one of Claims 1 to 3, **characterized by** further comprising detection means for detecting an amount of intake air as a substitute value for the flow rate of the exhaust gas, and
in that the valve driving control means controls the valve driving state of at least one of the intake valve and the exhaust valve so as to reduce the flow rate of the exhaust gas when the amount of intake air detected by the detection means is equal to or larger than a predetermined value.

5. The internal combustion engine according to any one of Claims 1 to 4, **characterized in that** the burner apparatus comprises a fuel addition valve, ignition means, and a pretreatment catalytic converter.
